# EUROPEAN PATENT APPLICATION

(11) **EP 1 315 361 A1**
(43) Date of publication of application: **28.05.2003**
(21) Application number: 01440398.4
(22) Date of filing: 23.11.2001
(51) Int. Cl.: H04M 1/725

(54) **Multiconnector for mobile terminal**

(71) Applicant: ALCATEL, 75008 Paris (FR)
(72) Inventor: Douhet, Gérard, 67640 Fegersheim (FR)
(74) Representative: Menzietti, Domenico, Dipl.-Ing

(57) **Abstract**

The present invention relates to a mobile terminal (100) comprising connection means (10) including :
- at least one electrical contact (1), called first contact, connected to first means selected among charging means (20) and digital data transceiver means (30),
- at least one electrical contact, called second contact (1), connected to second means distinct from said first means selected among analog audio transmission means (40) and analog audio reception means (50),

According the invention, the first and second contacts are a same contact called multifunction contact (1) for transmitting at least wanted signals (S1, S11).

## Description

The present invention relates to a mobile terminal comprising connection means.

In a conventional manner, connectors used in a mobile multimedia terminal using interfaces for data transfer, audio devices connections and/or battery charging interfaces such as a mobile phone, a DECT terminal (DECT for Digital European Cordless Telecommunications) and a web tablet comprise connections dedicated to such specific functions. By way of example, a mobile phone contains connections to a power transformer block, to a headset and includes a data interface with a PC or a host equipment.

In the prior art, several connectors are used for providing all these kinds of connections. Therefore, proposals have been made to limit the number of connectors. To this purpose, the company Alcatel is selling a mobile phone named Alcatel one Touch 501 ™ comprising two different connectors. A first specific connector is used for the power supply function and comprises two contact elements : a electrical contact and a ground contact. A second connector combining a bi-directional audio transmission function and a bi-directional data transmission function comprises seven electrical contacts and an additional ground contact. Mono audio analog signals and data digital signals are sent by distinct electrical contacts dedicated to one single transmission type.

More precisely, in this second connector electrical contacts are used as follows. First and second contacts allow transmission or reception of mono audio signals when a headset or a car kit is used for telecommunication purpose. Third and fourth contacts are used for bi-directional transmission of data digital signals. To complete the data link, a fifth contact is required for supplying the used active data cable by the mobile power supply and the first and second contacts are used for control signals.

This prior art solution is not satisfactory since the number of necessary contacts is high and the use of specific connectors is complex, takes a lot of space and is expensive because it does not take benefit of the scale effect of a standard component. By way of example, an external device such as an adapter is necessary for a connection to a PC. Thus, the first connector is not able to directly charge up the mobile terminal battery through standard PC or any host equipment particularly during travels. Furthermore, the active data cable consumes mobile power supply during data link.

It is therefore the main object of the present invention to implement a mobile terminal comprising connection means allowing interfacing with the external world for several functions, optionally operating simultaneously, such as :
- mobile terminal power supply and battery charge,
- data digital bi-directional transmission for example with a PC or host equipment,
- audio reception and transmission.

Another object of the invention is to provide connection means optimised in terms of mechanical size, reliability, inter-workability and standard compliance.

To this end, the invention provides a mobile terminal comprising connection means including :
- at least one electrical contact, called first contact, connected to first means selected among charging means and digital data transceiver means,
- at least one electrical contact, called second contact, connected to second means distinct from said first means selected among analog audio transmission means and analog audio reception means,
**characterized in** that said first and second contacts are a same contact called multifunction contact for transmitting at least wanted signals.

In the present description, wanted signals designate signals carrying information such as audio analog signals or data digital signals or a charging current.

The invention makes it possible to reduce the number of necessary contacts saving global volume thanks to a combination of functions in multifunction contact(s).

This invention applies for the full range of mobile terminals. Even the low cost products can use multifunction contact(s) such as for battery charging and listening to music.

Advantageously, the mobile terminal of the invention can be a radio mobile communication equipment selected among a mobile phone and a DECT terminal.

Furthermore, a mobile phone or a DECT terminal of the invention can further comprise hang up detection means coupled to said analog audio reception means in order to stop the music or radio listening when an incoming call occurs and consequently provide the ability to switch on the mobile communication. At the closure of such communication, initiated locally or remotely, an FM radio or an MP3 audio listening can be restored.

According to the invention, the mobile terminal can also be an internet appliance selected among a web tablet, an organizer and a video player or an audio equipment selected among an Moving Picture experts group 1 audio layer 3 (MP3) player, an audio recorder and a Frequency Modulation (FM) radio player.

Preferably, connection means can further include a ground contact and all contacts can belong to one single connector for an optimised integration on the terminal of the invention and a practical use.

Advantageously, the connection means of the invention can comprise a universal serial bus (USB) connector.

Under such circumstances, the connection means of the invention is a well defined standardized connector. The first contact of the invention connected to charging means and the ground contact allow the application of a direct voltage of 5V coming from an external power source such as the contact commonly designed as Vbus of a PC USB port. Thus, the user is able to charge the mobile terminal battery with a standard cable directly linked to all modern PC or host equipment. There is no need to travel with a charger device or an link adapter between mobile terminal and PC.

Moreover, USB data links use two electrical contacts commonly referred as D+ and D- and a ground contact. Unlike a classical serial transmission, such a USB data link is performed without the need of additional control signals and the cable used for the data links does not use the power supply of the mobile terminal.

Preferably, the data connection and exchange with a PC or a host can be performed simultaneously with the charge of the terminal battery, then avoiding any disturbance during the data transfer link with a battery power supply voltage drop.

Furthermore, the USB interface provides a advantageous high bit rate transmission for mobile terminal acting as a modem and needing to have file loading from PC or synchronization with PC. This advantage will be reinforced with the new mobile phone data transmission using technologies like General Packet Radio Service (GPRS), Enhanced Data rates for the Global system for mobile communications Evolution (EDGE), Universal Mobile telecommunications systems (UMTS).

For example, a USB connector of the invention such as a "mini B" receptacle comprises four electrical contacts namely one supply contact, D+, D- and an additional electrical contact instead of the nine electrical contacts used in the mobile terminal of the prior art and one ground contact instead of two.

In a preferred embodiment, digital data transceiver means of the invention comprise a USB data driver piloting data signals.

Preferably, the mobile terminal of the invention can further comprise signal detection means for detecting the passage of the wanted signals selected among the charge current and the digital data signals and the analog audio signals.

The analog audio transmission means of the invention can comprise a stereo amplifier.

In this manner, unlike the prior art, a stereo audio listening of FM radio or MP3 player through the mobile terminal is possible when using e.g. a stereo headset or loudspeakers belonging to an external audio equipment such as a "car kit" connected to the mobile terminal of the invention.

The characteristics and objects of the present invention appear in greater detail in the following description with reference to the accompanying figures which are presented by way of non-limiting illustration.

In these figures :
- Figure 1 is an illustration of a first embodiment of a mobile terminal of the invention comprising a USB connector and several functional means,
- Figure 2 shows a mono headset connected to the USB connector of figure 1,
- Figure 3 shows a car kit connected to a USB connector of a mobile terminal of the invention,
- Figure 4 is an illustration of a second embodiment of a mobile terminal of the invention comprising a USB connector and several functional means,
- Figure 5 shows a stereo headset connected to the USB connector of figure 4.

In all the figures, common elements or means, i.e. that perform the same function, are designated by the same reference.

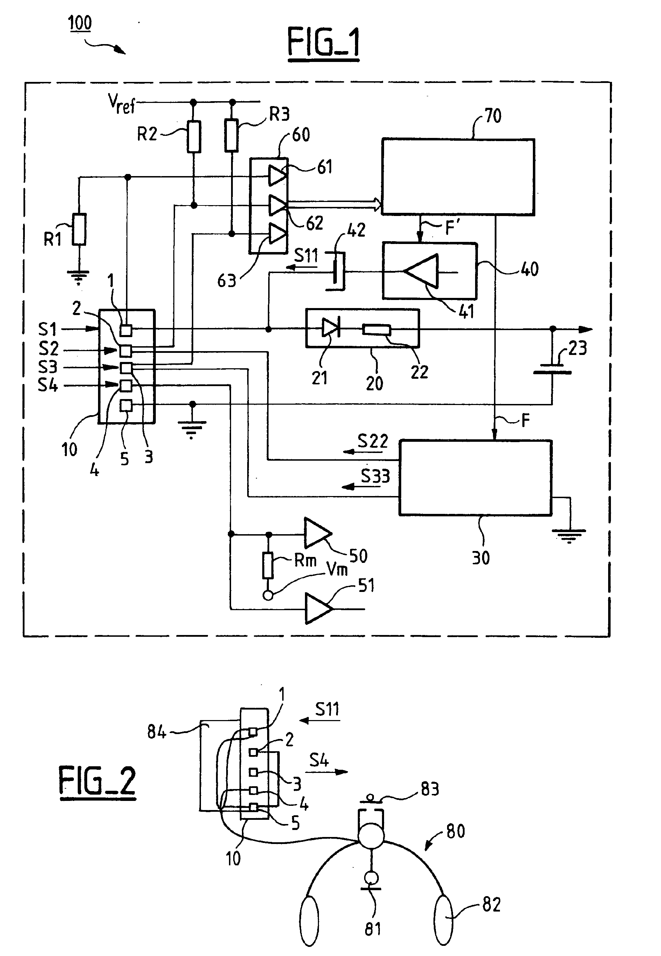

Figure 1 is an illustration of a first embodiment of a mobile terminal of the invention 100 comprising several functional means and a USB connector 10 constituting connection means. The mobile terminal 100 is a mobile phone allowing an interface with the external world for several functions, optionally operating simultaneously, such as :
- mobile terminal power supply and battery charge,
- data digital bi-directional transmission for example with a PC or host equipment,
- audio reception and mono audio transmission.

The USB connector 10 comprises :
- a first electrical contact 1, called multifunction contact, grounded through a resistor of high impedance R1,
- two electrical contacts 2, 3 respectively called D+ and D-, each biased to a direct voltage Vref through respective resistors of high impedance R2, R3,
- another electrical contact called additional contact 4,
- and a ground contact 5 directly grounded.

Functional means associated with these contacts comprise :
- charging means 20 comprising a diode 21 and a resistor 22 which are connected at one end to the multifunction contact 1 and at the other end to the ground contact 5 via a terminal battery 23, and eventually traversed by a charge current S1,
- data USB driver 30 constituting digital data transceiver means, connected to D+ and D- contacts 2 and 3, grounded and enabling to receive for example USB data signals S2, S3 or to transmit USB data signals S22, S33,
- analog audio transmission means called mono means 40 connected to the multifunction contact 1 and comprising a mono audio amplifier 41 protected by a capacitor 42 when a voltage is applied on the multifunction contact 1, and enabling to transmit for example a mono analog audio signal called listening signal S11,
- analog audio reception means 50 such as a microphone preamplifier loaded by a microphone resistor Rm and an analog supply voltage Vm, connected to the additional contact 4, and enabling to receive for example a mono audio signal called microphone signal S4,
- hang up detection means 51 such as a comparator coupled to the audio reception 50 means and also connected to the additional contact 4.

The multifunction contact 1 is either used for mobile terminal power supply and battery charge or for an audio transmission. Thus, there is a need to know when an external power is connected to contact 1 and more broadly what is connected on the USB connector 10 so too when functional means 20, 30, 40, 50 of the invention 100 have to work.

Therefore, the mobile phone 100 further comprises :
- signal detection means 60 comprising three detection devices 61, 62, 63 respectively connected to multifunction contact 1, contact D+ 2 and contact D- 3, and detecting the passage of charge current S1 or listening signal S11 through contacts 1, and the passage of USB data signals S2, S22, S3, S33 through contacts D+ and D- 2 and 3,
- a central unit processor 70 located at the output of the detection means 60 allowing to select the appropriate behaviour of the mobile 100 regarded connected devices and functional means and then piloting (see arrow F) the data USB driver 30 and mono means 40 (see arrow F'),

The device detection by means 60 is based on the analysis of the wanted signals passing through the multifunction contact 1 and contacts D+, D- 2 and 3. Such analysis is made namely by polling the level state of the multifunction contact 1 and the contacts D+, D- 2 and 3.

As it is grounded through high impedance, the multifunction contact 1 ensures that the level returns to zero (state 0) when no power supply is applied on it. As it is biased to a direct voltage Vref through high impedance, contacts D+ and D- 2, 3 ensure that a level is high (state 1) when such contacts 2, 3 are not used.

The multifunction contact 1 and the ground contact 5 allow the application of a direct voltage of 5V coming from an external power source (not shown) delivering the charge current S1 such as the contact commonly designed as Vbus of a PC USB port or such as a cigar lighter charger.

This voltage is used for supplying the power (not shown) to the mobile terminal 100 or for charging the mobile terminal battery 23 through the charging means 20.

When a voltage is applied on the multifunction contact 1, the audio transmission means 40 is disabled but the USB driver 30 can be enabled. Therefore, data signals transmission between external devices and the mobile terminal 100 can be performed in parallel with the charge of the battery 23 thanks to both contacts D+ and D- 2, 3 and the multifunction contact 1. By way of example, an exchange of USB data signals S2, S22, S3, S33 can directly occur between a PC (not shown) via its USB port and the mobile terminal 100. The data connection and exchange with a PC or a host always made with the power available to recharge the battery 23, avoids any disturbance during the data transfer link with battery power supply voltage drop.

Moreover, when a voltage is applied on the multifunction contact 1, other devices (camera...) using one of contact D+ or D- 2, 3 can be detected; the appropriate functional means needed in the mobile terminal 100 to exploit wanted signals (video signals, audio signals...) coming from such devices are well known by the man skilled in the art and will not be described further there.

When no voltage is applied on the multifunction contact 1, the situation is opposite : the USB data driver 30 is disabled and mono means 40 can deliver the listening signal S11 to a mono headset (see figure 2). Then, the charging means 20 with a diode behaviour is isolated from listening signal S11. Such signal S11 is referenced as a low voltage signal. The capacitor 42 avoids having a direct current in a connected headset.

Once again, when no voltage is applied on the multifunction contact 1, other devices using one of contact D+ or D- can be detected.

In all cases, a microphone (not shown), belonging or not to a mono headset can be connected via the additional contact 4. By way of example, this microphone transmitting the microphone signal S4 can be used to a play black and/or recording acoustic signal during the charge of the terminal battery 23.

Table 1 hereunder gives the detection possibilities of the various devices.

**Table 1**

| **Multifunction contact 1 state** | **Contact D+ 2 state** | **Contact D- 3 state** | **Device type or function performed** |
|---|---|---|---|
| 0 | 0 | 0 | Device type 1 |
| 0 | 0 | 1 | Mono headset, Loudspeaker |
| 0 | 1 | 0 | Device type 2 |
| 0 | 1 (Vref) | 1 (Vref) | No device connected |
| 5 volts | 0 | 0 | Microphone and Power supply charger |
| 5 volts | 0 | 1 | Device type 3 |
| 5 volts | 1 | 0 | Device type 4 |
| 5 volts | 1 | 1 | Power supply charger only |
| 5 volts | Data | Data | Data Transmission and Power supply charger |

Figure 2 shows a mono headset 80 directly connected to the USB connector 10. Such a mono headset 80 comprises a microphone 81, earphones 82, and is equipped with a switch 83 allowing :
- to transmit to the user the signaling of a request for hanging up an incoming call,
- to create a short circuit to the ground contact 5 of the additional contact 4 during the incoming call or during the established call,
- to close the incoming call.

The mono headset 80 further comprises a male connector 84 adapted to the USB connector 10. A listening signal S11 is injected via multifunction contact 1 in earphones 82. During a communication or audio listening, a microphone signal S4 coming from the microphone 81 is injected into the mobile terminal of the invention through the additional contact 4. Moreover, to achieve the detection of the mono headset 80 by the mobile terminal 100, the male connector 84 grounds contact D+ 2.

This first embodiment of the invention is very simple. An improvement of this first embodiment is obtained by putting an electronic self at the input of the charging means 20. Such electronic self lets the charge current S1 go through the charging means 20 and ensures at the same time a high impedance for the listing signal S11 coming from means 40. Thus, a charging function and a listening function can be performed simultaneously which is advantageous namely when a car kit is connected to such mobile terminal of the invention.

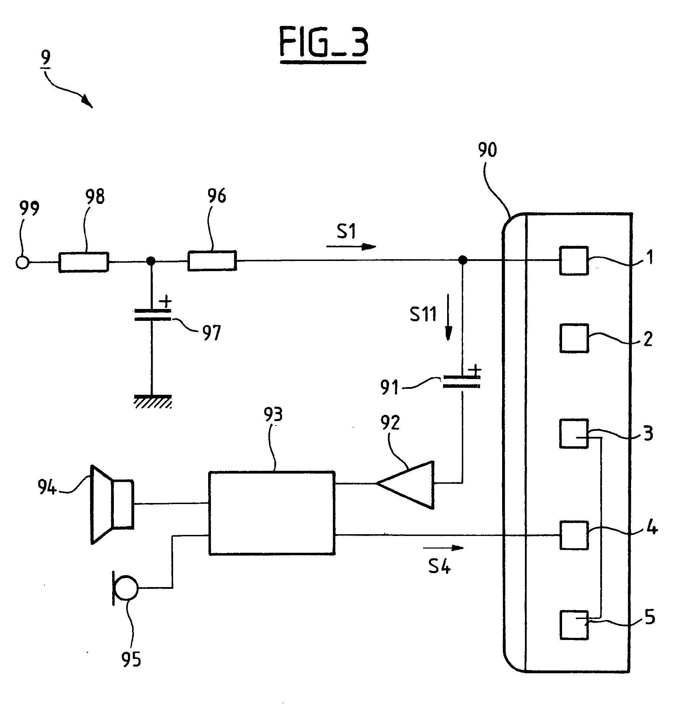

Figure 3 shows a car kit 9 directly connected via a male connector 90 to a USB connector 10 of this improved first embodiment of the invention. To achieve the detection of the car kit 9 by the mobile terminal, the male connector 90 grounds contact D- 3. Thus, in this configuration, the car kit is the so called device 4 of Table 1.

Such a car kit 9 comprises :
- a capacitor 91 protecting from a charge current S1 delivered in multifunction contact 1,
- an mono audio amplifier 92 following the capacitor 91,
- hand free signal audio processing means 93, disposed at the output of the mono audio amplifier 92 and connected to additional contact 4,
- a loudspeaker 94 disposed at an output of the signal audio processing means 93, and a microphone 95 disposed at an input of the signal processing means 93,
- a resistor 96 loading the mono audio amplifier of the mobile terminal (not shown) and working in combination with the electronic self added in the mobile terminal,
- a noise filtering capacitor 97 directly grounded and a noise filtering resistor 98, both serving to suppress any noise coming from the car battery,
- a connection 99 to the car battery delivering typically 12 V through a cigar lighter,

The car kit 9 is also equipped with a switch (not shown) playing the same role as the switch 83 of the headset 80.

A listening signal S11 is injected via multifunction contact 1 in the loudspeaker 94. The charge current S1 injected via the multifunction contact 1 into the mobile terminal. During a communication or an audio listening, a microphone signal S4 coming from the microphone 95 is injected into the mobile terminal of the invention through the additional contact 4.

An alternative of the first embodiment of the invention is obtained by exchanging the positions of means 50 and associated elements Rm, Vm and means 51 with the one of means 40. In this case, a capacitor may be useful at the input of the device 50 to protect this device from the DC voltage when a voltage is applied on the multifunction contact 1. In normal microphone use, the Vm voltage is much lower than the battery 23 voltage allowing the isolation of the device 20 by the mains of the diode behavior 21.. This alternative allows a simultaneous use of a power supply for battery charging and of a headset for listening to music. In this configuration, a microphone and a switch is preferably not used during the charge.

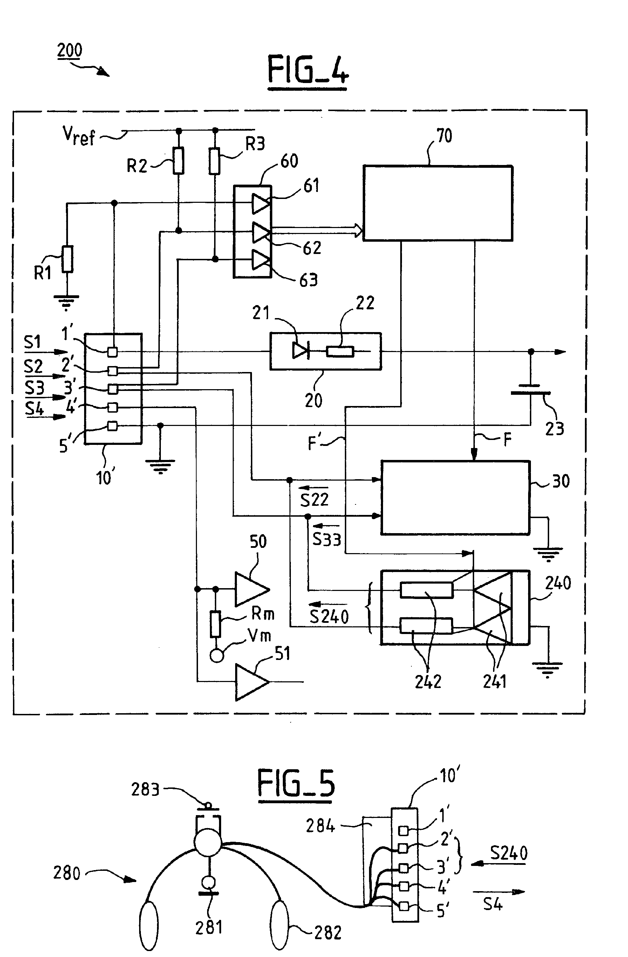

Figure 4 is an illustration of a second embodiment of a mobile terminal of the invention 200 comprising several functional means and a USB connector 10' constituting connection means. The mobile terminal 200 is a mobile phone allowing an interface with the external world for several functions, optionally operating simultaneously, such as :
- mobile terminal power supply and battery charge,
- data digital bi-directional transmission for example with a PC or host equipment,
- audio reception and stereo audio transmission.

The USB connector 10' comprises:
- a first electrical contact, called supply contact 1', grounded through a resistor of high impedance R1,
- two electrical contacts 2', 3' respectively called D+ and D-, each biased to a direct voltage Vref through respective resistor of high impedance R2, R3,
- another electrical contact called additional contact 4',
- and a ground contact 5' directly grounded.

Functional means associated with these contacts comprise :
- charging means 20 comprising a diode 21 and resistor 22 which are connected at one end to the supply contact 1' and at the other end to the ground contact 5' via a terminal battery 23, and eventually traversed by a charge current S1,
- data USB driver 30 constituting digital data transceiver means, connected to D+ and D- contacts, 2' and 3', grounded and enabling to receive for example USB data signals S2, S3 or to transmit USB data signals S22, S33,
- stereo analog audio transmission means, called stereo means 240, comprising a stereo audio amplifier in two parts 241 protected by a tri state isolation in two parts 242 connected to contacts D+ and D- 2' and 3', and enabling to transmit for example a stereo analog audio signal called stereo listening signal S240,
- analog audio reception means 50 such as a microphone preamplifier loaded by a microphone resistor Rm and an analog supply voltage Vm, connected to the additional contact 4', and enabling to receive for example a mono audio signal called microphone signal S4,
- hang up detection means 51 such as for example a comparator coupled to the audio reception 50 means and also connected to the additional contact 4'.

Therefore, both contacts D+ and D- 2' and 3' are multifunction contacts since they are used for data exchange or for an stereo audio transmission. Thus, there is a need to know what is connected on the USB connector 10' so too when functional means 20, 30, 240, 50 of the invention 200 have to work.

Therefore, the mobile phone 200 further comprises :
- signal detection means 60 comprising three detection devices, 61, 62, 63 respectively connected to supply contact 1', contact D+ 2', and contact D- 3', and detecting the passage of charge current S1 through supply contact 1', and the passage of stereo listening signal S240 or USB data signals S2, S22, S3, S33 through contacts D+ and D-, 2' and 3',
- a central unit processor 70 located the output of detection means 60 allowing to select the appropriate behaviour of the mobile 200 regarded connected devices and piloting (see arrow F) the data USB driver 30 and stereo means 240 (see arrow F').

As in the first embodiment of the mobile terminal of the invention, the device detection by means 60 is based on the analysis of the signals passing through the multifunction contact 1 and contacts D+, D- 2 and 3. Such analysis is made namely by polling the level state at the multifunction contact 1 and the contacts D+, D- 2 and 3.

As with the mobile terminal 100 of figure 1, when a voltage is applied on the supply contact 1', the USB driver 30 can be enabled. Stereo transmission means 240 can also be enabled and deliver the stereo listening signal S240 to a stereo headset (see figure 4) or to a stereo loudspeaker belonging for example to a car kit. Stereo means 240 are referenced to ground with low impedance load (not shown). This avoids the risk of consumption of the digital USB inputs gates. The low level of the stereo signal S240 and the low impedance load can be used to simplify the isolation structure of the USB driver 30. Thus, the two inputs stage of the USB driver 30 can always be connected thanks to the fact that the stereo signal S240 is under the threshold of the input gates and even more with enough margin to prevent the gates from working in a linear mode with the two complementary transistors of each gate entering in conduction.

Obviously, when no voltage is applied on the supply contact 1', the USB data driver 30 is disabled and the stereo means 240 can be enabled.

In all cases, a microphone (not shown) belonging or not to a stereo car kit or a stereo headset can be connected via the additional contact 4' and therefore used during the charge of the terminal battery.

Table 2 hereunder gives the detection possibilities of the various devices.

**Table 2**

| **Supply contact 1 state** | **Contact D+ 2 state** | **Contact D- 3 state** | **Device type or function performed** |
|---|---|---|---|
| 0 | 0 | 0 | Stereo headset, Loudspeaker |
| 0 | 0 | 1 | Mono headset |
| 0 | 1 | 0 | Device type 1 |
| 0 | 1 (Vref) | 1 (Vref) | No device connected |
| 5 volts | 0 | 0 | Stereo car kit with Power supply charger |
| 5 volts | 0 | 1 | Device type 2 |
| 5 volts | 1 | 0 | Mono car kit with Power supply charger |
| 5 volts | 1 | 1 | Power supply charger only |
| 5 volts | Data | Data | Data Transmission and Power supply charger |

Figure 5 shows a stereo headset 280 directly connected to the USB connector 10'. Such a stereo headset 280 comprises a microphone 281, stereo earphones 282, and is equipped with a switch 283.

The stereo headset 280 further comprises a male connector 284 adapted to the USB connector 10'. An stereo listening signal S240 is injected via contacts D+ and D- 2' and 3' in stereo earphones 282. During a communication or audio listening, a microphone signal S4 coming from the microphone 281 is injected to the mobile terminal of the invention through the additional contact 4'.

An alternative of this second embodiment of the invention is obtained by exchanging one the connections of the means 240 for example the connection to contact D+ 2' and the connection to additional contact 4' of means 50, elements Rm, Vm and means 51.

The above description has been given by way of illustration. Any means can be replaced by equivalent means without going beyond the limit of the invention.

The detection of the different devices connected the mobile terminal of the invention may be performed by an analysis of the state and level transitions of more than three contacts, for example, four contacts when using a USB connector comprising four electrical contacts. By way of example, the contact 4' according to the second embodiment of the invention can be used particularly in high end product including USB with On The Go (OTG) feature which allows the mobile terminal to have alternatively a behaviour of slave or of master as a function of the OTG signal Table 3 hereunder gives some detection possibilities in this configuration.

**Table 3**

| **Contact 4' State** | **Device type** | **Remarks** |
|---|---|---|
| V4' = Vm | No microphone connected | |
| V4' = Vm - Rm x Im | Microphone connected | Different Im value can allow the discrimination of several devices with microphone or several type of microphones. |
| OTG signal | OTG device connected | |

With respect to the protection of the transmission audio path, the tristate isolation at the output of the stereo amplifier can be replaced by an analog switch.

Moreover, the charging means can be a simple scheme with a diode and resistor as well as a sophisticate integrated circuit including an AC/DC converter.

## Claims

1. Mobile terminal (100, 200) comprising connection means (10, 10') including :
- at least one electrical contact (1, 2', 3'), called first contact, connected to first means selected among charging means (20) and digital data transceiver means (30),
- at least one electrical contact, called second contact (1, 2', 3'), connected to second means distinct from said first means selected among analog audio transmission means (40, 240) and analog audio reception means (50),
**characterized in that** said first and second contacts are a same contact called multifunction contact (1, 2', 3') for transmitting at least wanted signals (S1, S11, S2, S3, S22, S33, S240).

2. Mobile terminal (100, 200) in accordance with claim 1 **characterized in that** it is a radio mobile communication equipment selected among a mobile phone and a DECT terminal.

3. Mobile terminal (100, 200) in accordance with claim 2 **characterized in that** it further comprises hang up detection means (51) coupled to said analog audio reception means.

4. Mobile terminal in accordance with claim 1 **characterized in that** it is an internet appliance selected among a web tablet, an organizer and a video player.

5. Mobile terminal in accordance with claim 1 **characterized in that** it is an audio equipment selected among an MP3 player, an audio recorder and an FM radio player.

6. Mobile terminal (100, 200) in accordance any of claims 1 to 5 **characterized in that** connection means (10, 10') further include a ground contact (5, 5') and **in that** all said contacts (1 to 5, 1' to 5') belong to one single connector (10, 10').

7. Mobile terminal (100, 200) in accordance with any of claims 1 to 6 **characterized in that** said connection means (10, 10') comprise a universal serial bus (USB) connector (10, 10').

8. Mobile terminal (100, 200) in accordance with any of claims 1 to 7 **characterized in that** said digital data transceiver means (30) comprise a USB data driver (30).

9. Mobile terminal (100, 200) in accordance with any of claims 1 to 8 **characterized in that** it further comprises signal detection means (60) for detecting the passage of said wanted signals selected among the charge current (S1), digital data signals (S2, S3, S22, S33) and the analog audio signals (S11).

10. Mobile terminal (200) in accordance with any of claims 1 to 9 **characterized in that** said analog audio transmission means (240) comprise a stereo amplifier (241).

11. Headset (80, 280) suitable to be connected to said mobile terminal (100, 200) in accordance with any of claims 1 to 10.

12. Car kit (9) suitable to be connected to said mobile terminal (100) in accordance with any of claims 1 to 10.
